# EUROPEAN PATENT SPECIFICATION

(11) **EP 4 106 995 B1**
(45) Date of publication and mention of the grant of the patent: **13.08.2025**
(21) Application number: 21757250.2
(22) Date of filing: 19.02.2021
(51) Int. Cl.: C08J 5/18, C08L 23/08, C08L 27/16, C08L 71/02, C08F 214/22

(54) **PVDF EXTRUSION AGENT CONTAINING INTERFACIAL AGENT**
PVDF-EXTRUSIONSMITTEL MIT GRENZFLÄCHENMITTEL
AGENT D'EXTRUSION DE PVDF CONTENANT UN AGENT INTERFACIAL

(30) Priority: 21.02.2020 US 202062979577 P
(43) Date of publication of application: 28.12.2022
(73) Proprietor: Arkema, Inc., King of Prussia, PA 19406 (US)
(72) Inventor: HENRY, James, Downingtown, Pennsylvania 19335 (US); O'BRIEN, Gregory S., Downingtown, Pennsylvania 19335 (US)
(74) Representative: Arkema Patent
(86) International application number: PCT/US2021/018678
(87) International publication number: WO 2021/168181

(56) References cited:
- WO-A1-2010/138172
- WO-A1-2017/201135
- FR-A1- 2 892 421
- US-A1- 2005 101 722
- US-A1- 2017 088 989
- US-A1- 2018 319 963
- US-B2- 8 501 862
- US-B2- 8 501 862

## Description

### FIELD OF THE INVENTION

The present invention relates to a polymer composition identified as an extrusion agent, and also referred to as a polymer process aid or PPA, and when added to a polymer, will result in less quality defects formed when melt processed. More specifically, the polymer process aid will reduce or eliminate surface defects such as melt fracture that can appear when a polymer, more specifically a polyolefin polymer, is melt extruded.

### PRIOR ART AND TECHNICAL PROBLEM

In a melt extrusion process, a solid polymer, normally in the form of pellets or powder, is fed into an extruder and heated to a temperature above the melting point to produce a polymer melt. The polymer melt is then conveyed through an extrusion die located at the end of the extruder and formed into a desired shape such as a tube, sheet or film.

During the extrusion process, the polymer melt is subjected to shear stresses that in part can cause quality defects on the products surface, with the most common quality defect being melt fracture. Melt fracture appears as a surface haze often described as appearing matt in finish, and under magnification, visually appears as a rough surface and having a saw tooth pattern.

As a polymer melt exits the die, the slower moving polymer in direct contact with the die accelerates quickly. This quick acceleration often causes cohesive fracture on the polymer surface referred to as melt fracture. Melt fracture is normally considered an unacceptable quality problem that adversely affects optical and visual characteristics of the final product (an example would be blown film). Melt fracture can also adversely affect physical and mechanical properties of the final product.

The formation of melt fracture is most prevalent when extruding high molecular weight polyolefin polymers such as those having Melt Index values at or below 1 g/10 minutes. A high molecular weight polymer is often chosen to obtain improved physical and mechanical properties of the film produced - such as higher tensile strength at break. Other times, higher molecular weight polymers are selected for needed processing characteristics such as increased polymer melt strength. Processes such as blown film and pipe extrusion are common examples of processes that benefit from polymers having higher melt viscosities.

A quality problem sometimes attributed to melt fracture is polymer build-up at the die exit, and this problem is often referred to as die drool. When melt fracture occurs, small polymer melt particles can shed from the surface and collect on tooling surfaces near the die exit. Over time, the small melt particles build up to form die drool. Because die drool tends to remain on the die for extended periods of time, it can burn and form solid specks that eventually release from the die to form quality defects (such as specks and drag marks) on the product. Such problems, in addition to increasing scrap rate and labor costs, tend to limit overall production rates. Additives such as mineral fillers (contained in many polymer compounds) can further promote melt fracture and die drool formation.

Melt Fracture and die drool formation often occur in association with another phenomena called die swell. The formation of die swell is associated with the quick release of elastic stresses in the melt as the melt exits the die. The presence of excessive die swell is known to contribute to quality problems. Polymer process aids are known to significantly reduce die swell formation.

Extrusion of polymers having low melt index often generate high melt pressures. Often times, the production speed is limited by the maximum melt pressure rating for the system being used. Polymer process aids are known to reduce melt pressure thereby allowing for higher production speeds.

To address and resolve these problems, polymer process aids containing fluoropolymers are widely used. A polymer process aid works by depositing a "slippery" coating on internal tooling surfaces that are in direct contact with the polymer melt. This creates "wall slip" where the polymer at the interface with the wall of the die slips, thereby reducing the melt stress as the melt exits the die. The polymer melt can then flow through the die with less shear stress formation which eliminates melt fracture and lower melt pressures. Polymer process aids can provide multiple benefits including but not limited to reduction or elimination of melt fracture (leading to visually clearer products), lower die swell, lower die drool formation, lower melt pressures, faster line speeds, and improved product properties.

For melt processable thermoplastic polymers (and compounds), there exists a shear rate that if processed below will produce only a smooth surface (and often shiny), and if above will produce a rough (and often dull) surface. The shear rate at which surface defects are first observed is referred to as the Critical Shear Rate (CSR). Below the CSR, the polymer surface is normally smooth, and just above the CSR, melt fracture begins to form. As a general rule, as shear rate increases above the CSR, the size or intensity of the melt fracture also increases. An example polymer having these characteristics would be a polyolefin polymer such as a LLDPE resin (linear low-density polyethylene) used in the manufacture of blown films. Other examples include LDPE (low-density polyethylene), MDPE (medium-density polyethylene), UHDPE (ultra high-density polyethylene) or HDPE (high-density polyethylene).

Low Melt Index LLDPE polymers typically have low critically shear rates and are more prone to melt fracture formation. As a general rule, the lower the polymer Melt Index, the more prone the polymer will be to melt fracture formation. Since low Melt Index LLDPE polymers are normally used to produce blown film, as would be expected, melt fracture issues are a common concern for such processes.

In addition to the use of high molecular weight (low Melt Index) polymers, inclusion of additives such as mineral fillers further promote melt fracture formation. As an example, the addition of talc, diatomaceous earth (used as anti-blocking agents), light stabilizers, carbon black or mineral pigments all increase the likelihood of melt fracture formation. It is commonly assumed that the presence of many of these additives act as an abrasive that hastens removal of the fluoropolymer coating thus reducing the PPA efficiency. Generally more fluoropolymer PPA is needed to maintain a melt fracture free film when fillers are in the polyolefin
The relative performance of a polymer process aid is normally related to the efficiency of the PPA to eliminating melt fracture. As an example, when producing a blown film, if one PPA is found effective at 300 ppm by weight and a second PPA found effective at 500 ppm, the PPA found effective at 300 ppm is said to be more efficient at eliminating melt fracture. The primary benefit of using a more efficient PPA is that addition levels can be reduced while still achieving desired performance.

A common means of evaluating PPA performance is to measure the time to eliminate melt fracture once the PPA is introduced. A typical test involves setting up extrusion conditions favorable to melt fracture formation that include proper selection of tooling, polymers and process conditions. Once the correct conditions for melt fracture formation are obtained, and the process is stable, PPA can then be added, and the time to eliminate melt fracture recorded. A better performing PPA is one that requires less time to eliminate melt fracture.

There is a direct correlation between the ability to eliminate melt fracture quickly and PPA addition levels. In general, PPA's found capable of eliminating melt fracture quickly are also found to provide better efficiency. More specifically, PPA's able to eliminate melt fracture quickly are more efficient and are effective at lower addition levels.

As an example, when producing a blown film, if one PPA can eliminate melt fracture in 30 minutes and another PPA in 40 minutes, the PPA able to eliminate melt fracture in 30 minutes is said to be more efficient at eliminating melt fracture.

Most polymer process aids contain either a thermoplastic PVDF or a fluoroelastomer. In general, both are comprised of vinylidene fluoride (VDF) monomer, and in most cases, include the comonomer hexafluoropropene (HFP). The primary compositional difference between a thermoplastic PVDF and a fluoroelastomer in a PPA is the HFP content. Thermoplastic PVDF resins typically have HFP contents up to 25 weight percent (wt.%), whereas fluoroelastomers typically have HFP levels above 25 weight percent, and often closer to 40 weight percent. This compositional difference results in notable property differences. Thermoplastic PVDF resins are semicrystalline and have defined melting points, conversely, fluoroelastomers are amorphous and do not have melting points. In applications outside of PPA's, thermoplastic PVDF resins are often extruded and molded to produce structural parts. Fluoroelastomers, however, cannot be used in this manner, and most often are used to produce thermoset compounds that require crosslinking to achieve desired final properties.

Many polymer process aids contain an interfacial agent (often referred to as a synergist) that significantly improves melt fracture elimination and further reduces melt pressure. In a PPA, the fluoropolymer is thought to be the active component, and the interfacial agent, when combined with a fluoropolymer, together improve performance as a processing aide. A commonly used interfacial agent is polyethylene glycol (PEG) which is considered a lubricant.

Prior art provides contradictory evidence regarding the relationship between fluoropolymer particle size in the melt and performance. Some teach that smaller well dispersed fluoropolymer particles in the melt provide better performance while others claim the opposite with larger particles providing improved performance. It is understood that fluoropolymer particle size in the melt changes during manufacture and use. One would expect the fluoropolymer particle size in the melt to vary considerably with the varied shear conditions associated with melt extrusion.

U.S. Pat. 6,048,939, teaches that "to maximize processability improvements, it is desirable that the fluoropolymer process aid be well dispersed in the non-fluorinated polymer to be extruded. Generally, the smaller the particle size of the fluoropolymer in the melt, the better the dispersion."

U.S. Pat. 7449520 B2 discusses particle size performance in the melt and mentions melt flow index.

U.S. Pat. No. 3,125,547, discloses the use of 0.01 to 2.0 weight percent of a fluorocarbon polymer (e.g. a fluoroelastomer) to reduce die pressure in extrusions of high and low density polyethylene. The compositions of the copolymers described in this reference are fluoroelastomers and not thermoplastic PVDF.

In US 8,501,862, a polymer process aid containing a heterogeneous PVDF-HFP thermoplastic PVDF and an interfacial agent used as a processing aid is described. The patent discloses a broad melt viscosity range of 100 Pa.s to 10000 Pa.s which is beyond the useful melt viscosity range of most thermoplastic polymers. The examples provided describe thermoplastic PVDF having viscosities in the range of 1600Pa.s and 2350 Pa.s. The patent attributes the improved PPA performance to heterogeneous morphology and does not cite viscosity as contributing to any improved performance.

WO2001/027197A1 describes a process additive combining an amorphous and semicrystalline fluoropolymer as a latex. The two components are said to differ in copolymer content (measured by differences in melting point). No mention was made of higher fluoropolymer melt viscosity providing any benefits. U.S. Pat. No. US 5,106,911, describes a similar composition combined by melt processing and not in a latex.

U.S. Pat. No. 6,599,982B2 describes a process aid containing a blend of two fluoroelastomers having different viscosities.

U.S. Pat. 7,375,157 describes a polymer melt additive containing a fluoropolymer where long chain branching has been introduced.

U.S. Pat. 5,132,368 describes a fluoropolymer composition containing polar functional chain ends. The fluoropolymers of 5,132,368 contain end groups such as --SO₃ H, -COF, and COOH. The referenced patent does not associate any useful properties to fluoropolymer melt viscosity.

U.S. Pat. 7,538,156 and US2006/0025523 describe masterbatches comprised of a fluoropolymer, an interfacial agent and a polyolefin. The melt viscosity of the fluoropolymer by capillary rheometry is between 1 to 20 kP with a preferred range from 3 to 12 kP. The melt viscosity range referenced is typical of what is currently used in industry.

FR2892421A1 describes a masterbatch comprised of a fluorinated polymer, an interfacing agent and a polyolefin. No mention is made of any relationship between fluoropolymer viscosity and performance.

Patent for fluoropolymers used as processing aids provides no mention of higher melt viscosity ranges providing any benefits.

For a polymer process aid to function well, the active (fluoropolymer) component must have a number of important characteristics:
**Polymer Incompatibility:** The fluoropolymer component of the process aid must be incompatible with the bulk polymer. Incompatibility allows for and promotes separation of the fluoropolymer from the bulk polymer thus facilitating transfer to internal die surfaces. Polymer incompatibility also improves durability of the fluoropolymer coating by being more resistant to ablation from the bulk polymer. Fluoropolymers as a class are inherently immiscible in polyolefin polymers and thus meet the requirement of incompatibility.
**Migration/Transfer:** The fluoropolymer component of the process aid must effectively migrate and transfer to the tooling surfaces.
**Surface Coating:** The fluoropolymer component of the process aid once at the die surface must have the ability to efficiently coat the surface.
**Adherence:** The fluoropolymer component of the processing aid needs to adhere and remain on the die surfaces once coated.
**Erosion Resistance:** The fluoropolymer component coating the die surfaces must be resistant to ablation from the bulk polymer melt. The rate of erosion needs to be lower than the rate of surface replenishment (migration and surface coating) for the PPA to be useful.

It is commonly understood that lower molecular weight polymers tend to adhere to surfaces better than those of higher molecular weight. As an example, the molecular weight of polymers used as melt adhesives are very low molecular weight polymers which are "sticky" and adhere to a multitude of surfaces. As molecular weight increases, the adhesive nature of a polymer decreases. With this understanding, one would expect any increase in melt viscosity would decrease the ability of the fluoropolymer to adhere to surfaces.

In regard to Migration/Transfer, a higher viscosity fluoropolymer will have the same ability to migrate to tooling surfaces, but one would expect a reduced ability to transfer and remain on the surface. For the PPA to transfer to the surface, it needs to separate from the bulk polymer and remain in place to eventually coat the surface. One familiar with the art would expect a decrease in the ability to transfer to the surface as fluoropolymer viscosity is increased.

The fluoropolymer to act as a PPA must coat the tooling surfaces. One familiar with the art would conclude that increasing the viscosity of the fluoropolymer would interfere with the ability of the fluoropolymer to effectively stretch and elongate which is needed to effectively coat the die surfaces.

The invention described herein is of a polymer process aid containing a thermoplastic PVDF polymer providing improved performance with the improved performance attributed to a defined viscosity range. Prior to this discovery, the relationship between thermoplastic PVDF viscosity and melt fracture reduction performance was unknown. In fact, it was generally believed that increasing fluoropolymer viscosity (molecular weight) would provide no additional benefits and eventually reduce performance. There are many reasons why those familiar with the art would come to such conclusions.

Unexpectedly, we discovered that improved performance could be gained if viscosity of the thermoplastic PVDF is raised above 25 kilopoise (kP), and that this improved performance is retained up to a viscosity of below 45 kP. This relationship between thermoplastic PVDF viscosity and performance was previously unknown. We have since discovered a thermoplastic PVDF viscosity range providing improved performance. Above and below this viscosity range, PPA performance is reduced. Since this relationship was previously unknown, the selection of thermoplastic PVDF in commercial PPA's has been limited to only those having low to moderate viscosities.

### BRIEF DESCRIPTION OF THE FIGURES

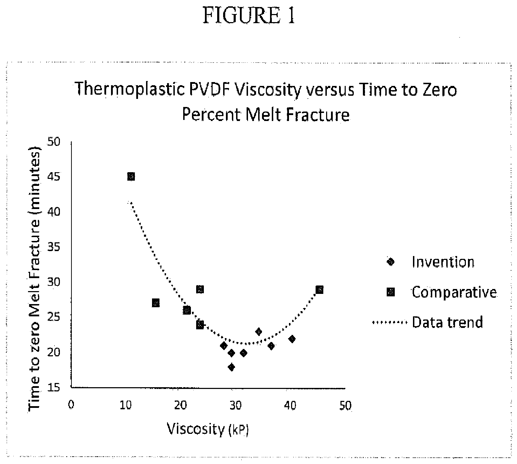

Figure 1 Melt Fracture Performance Summary Graph showing the Thermoplastic PVDF Viscosity versus Time to Zero Percent Melt Fracture.

### BRIEF DESCRIPTION OF THE INVENTION

The invention relates to a polymer process aid used to reduce or eliminate surface defects that often arise during extrusion of thermoplastic polymers, specifically polyolefin polymers. The polymer process aid is comprised of a thermoplastic vinylidene fluoride (VDF) copolymer (A) having at least 75 weight percent VDF, but preferably not more than 99.5 weight percent VDF, and, in preferred embodiments, 25 to 0.5 weight percent HFP. The copolymer (A) of this invention has a melt viscosity above 25 kP, preferably at or above 26 kP, and more preferably at or above 27 kP and of less than 45 kP when measured by capillary rheometry at 232°C and a shear rate of 100 s⁻¹. The polymer process aid also contains at least one interfacial agent (B) that preferably comprises from 80 to 1.0 weight percent of the polymer process aids composition.

The invention also includes a masterbatch (D) comprised of 0.5 to 20 weight percent of the polymer process aids composition (A/B) and from 99.5 to 80 weight percent of a polyolefin carrier polymer (C). The masterbatch can be produced by extrusion compounding and produced in pellet or powder forms.

The invention also includes an extrudable compound produced by combining the polymer process aid (A/B), or the masterbatch (D) with a polyolefin polymer (E). The polymer process aid (A/B) will comprise from 3000 to 50 ppm by weight of the extrudable compound. Optionally, the polymer process aid (A/B), and/or the masterbatch (D) and/or the extrudable compound can contain other components including but not limited to additives, fillers, colorants, antiblock agents, antioxidants and stabilizers.

The invention thus provides products and applications containing or produced from the polymer process aid (A/B), the masterbatch (D) and the extrudable compound. This invention is useful in the extrusion of polyolefin polymers for processes such as film extrusion, injection molding, extrusion blow molding, pipe, wire or cable extrusion, and fiber extrusion.

The VDF copolymer can be homogeneous, heterogeneous, blended, branched or contain functional groups. The combination of A and B to produce a polymer process aid can be preblended and used in the form of a blended powder or pellet for ease of use, or it can be used as individual components. The respective proportions by weight of (A) and (B) can be such that (A/B) is between 99/1 and 20/80, preferably between 30/70 and 70/30 and better still between 40/60 and 60/40.

### DETAILED DESCRIPTION OF THE INVENTION

The term "extrusion agent", also referred to as a "polymer process aid" or PPA, refers to an additive used to reduce quality defects such as melt fracture that can form during melt extrusion. The term "fluoropolymer" is used to describe any polymer that contains fluorine in the backbone. The term "PVDF" as used herein refers to a polyvinylidene fluoride polymer comprised of vinylidene fluoride VDF. The term "homopolymer" refers to a polymer comprised of a single monomeric unit. The term "copolymer" refers to a polymer comprised of two different monomeric units. The term "terepolymer" refers to a polymer comprised of three different monomeric units. The term "PVDF Copolymer" refers to a PVDF polymer comprised of vinylidene fluoride VDF and containing at least one other comonomer. The term "thermoplastic PVDF", refers to a PVDF copolymer wherein the VDF is at least 75 weight percent in the copolymer and having a melting point as measured by DSC per ASTM D3418. The term "fluoroelastomer", refers to an amorphous fluoropolymer comprised of vinylidene fluoride VDF that does not exhibit a melting point (by DSC per ASTM D3418).

The term "homogeneous copolymer" refers to a copolymer having a relative uniform distribution of comonomer in the polymer resulting in a single phase in the solid state. The term "heterogeneous copolymer" refers a copolymer having a non-uniform distribution of comonomer resulting in two or more domains that vary in HFP content. The term "multi-modal" refers to a polymer containing two or more distinct molecular weight distributions. The term "interfacial agent", also referred to as a "synergist", refers to a component that when combined with a fluoropolymer can improve process aid performance greater than when using the fluoropolymer alone. The term "compatible" describes two or more miscible polymers that when combined, can produce a homogenous polymer blend.

The term "masterbatch" refers to a composition comprised of a polymer process aid predispersed in a carrier polymer at levels in the range of 0.5 to 25 weight percent, preferably 1 and 10 weight percent. The term "carrier" polymer describes the primary component of a masterbatch used to contain the polymer process aids composition. The term "extrudate" describes a thermoplastic melt as it exits an extrusion die. The term "extrudable compound" as used herein describes a difficult to process polyolefin polymer that becomes less difficult to process after addition of a polymer process aid. The term "processability" as used herein to describe the relative ease of processing a polymer without the formation of quality defects such as melt fracture. A polymer described as having good processability is one that can be processed easily without the formation of quality defects. The term "efficiency" is used to describe polymer process aid performance. A PPA having a high efficiency is one that can eliminate melt fracture quickly or at lower addition levels. The term "D50" is a measure used to describe particle size of powders and is the portions of particles with diameters smaller than the value of 50 percent. Such particle size measurements are often done on fluoropolymer powders used to produce PPA's as well as the PPA if produced in powder form.

The term "Melt Flow Index" (MFI), or simply "Melt Index" (MI), describes a test performed per ASTM D1238 using an Extrusion Plastometer and reported in grams per 10 minutes.

The term "Mooney Viscosity" (MV) describes a test performed per ASTM D1646 using a Mooney Viscometer and reported in dimensionless Mooney units. Mooney viscosity is used to describe the melt viscosity of an elastomer. The term "Melt Viscosity" describes a test performed per ASTM D3835 using a capillary rheometer with viscosity units often reported in poise, kilopoise (kP), or pa.s.

Elastomers are normally characterized by Mooney Viscosity. In general, any composition that cites Mooney Viscosity (to characterize viscosity) are elastomers and are not thermoplastics. If a composition cites the use of Mooney Viscosity, the composition is a fluoroelastomer and is not the composition of this invention. The composition of this invention described as thermoplastic PVDF will cite either melt viscosity or Melt Index to describe melt viscosity.

Particles size of polymeric powder is measured using a Malvern Mastersizer 2000 particle size analyzer. The data is volume average particle size (diameter) using laser diffraction. Data generated is often presented as median diameters. As an example, the D50 (also referred to as D0.5) describes the diameter of the particles where 50 percent are smaller than that diameter. Other values often reported include but not limited to D10, D90 and D99.

The invention relates to a polymer process aid (A/B) used to reduce or eliminate surface defects that can arise during extrusion of thermoplastic polymers, preferably the thermoplastic polymer to be extruded is a polyolefin polymer (E). The polymer process aid (A/B) is comprised of a thermoplastic vinylidene fluoride (VDF) copolymer, also referred to as thermoplastic PVDF (A) where thermoplastic PVDF (A) is comprised of a least 75 weight percent VDF with the comonomer comprising of 0.5 to 25, preferably 1 to 25 weight percent. The thermoplastic PVDF (A) of this invention has a melt viscosity of greater than 25 kP, preferably 26 kP or greater or 27 kP or greater in the range of 25 kP to less than 45 kP, or 26 kP to less than 45 kP, or 27 kP to less than 45 kP, or preferably 25 kP to 43 kP, or 26 kP to 43 kP, or 27 kP to 43 kP, or more preferably greater than 25 kP to 40 kP, or from greater than 30 kP to less than 45kP when measured by capillary rheometry at 232°C and at 100 s⁻¹.

In one embodiment the thermoplastic PVDF (A) has a melt viscosity of 26 kP to less than 35 kP, or more preferably 27 kP to less the 33 kP per ASTM method D-3835 measured at 232°C and 100 s⁻¹ .

The thermoplastic PVDF (A) is a thermoplastic vinylidene fluoride copolymer that is within a defined melt viscosity range and is used as a process aid to reduce or eliminate quality defects such as melt fracture, or used to lower melt pressure. Examples of thermoplastic PVDF (A), include but are not limited to a) homogeneous copolymers; b) heterogeneous copolymers as defined in U.S. Pat. No. 8,501,862; c) branched copolymers; d) blended polymers) copolymers having functionalized groups on the main chain or chain ends and combinations thereof. Preferably the comonomer is hexafluoropropylene (HFP) copolymer, although other fluoromonomers may comprise the comonomer.

### THERMOPLASTIC PVDF POLYMER

The PVDF polymer useful in the present invention is a thermoplastic PVDF comprising at least 75 weight percent VDF monomer units. Useful thermoplastic PVDF polymers are homopolymers and copolymers having greater than 75 weight percent of vinylidene fluoride (VDF) units by weight, preferably 80 weight percent or more, preferably 85 weight percent or greater and preferably 90 weight percent or greater of VDF.

The thermoplastic PVDF polymer of the present disclosure is a copolymer. Examples of additional fluoromonomers (comonomers) that can be in the thermoplastic PVDF include , but are not limited to of tetrafluoroethylene (TFE), trifluoroethylene (TrFE), chlorotrifluoroethylene (CTFE), hexafluoropropene (HFP), vinyl fluoride (VF), hexafluoroisobutylene (HFIB), perfluorobutylethylene (PFBE), pentafluoropropene, 3,3,3-trifluoro-1-propene, 2-trifluoromethyl-3,3,3-trifluoropropene, fluorinated vinyl ethers including perfluoromethyl vinyl ether (PMVE), perfluoroethylvinyl ether (PEVE), ethylene tetrafluoroethylene (ETFE), ethylene fluoro trichloroethylene(ECTFE), perfluoropropylvinyl ether (PPVE), perfluorobutylvinyl ether (PBVE), 2,3,3,3-tetrafluoropropene, longer chain perfluorinated vinyl ethers, fluorinated dioxoles, such as perfluoro(1,3-dioxole); perfluoro(2,2-dimethyl-1,3-dioxole) (PDD), partially- or per-fluorinated alpha olefins of C₄ and higher, partially- or per-fluorinated cyclic alkenes of C₃ and higher, there copolymers and combinations thereof

Preferred polyvinylidene fluoride (PVDF) polymers of the present disclosure include but are not limited to copolymers of vinyl fluoride; copolymers of hexafluoropropene (HFP), and terpolymers of poly(vinylidene fluoride-tetrafluoroethylene-hexafluoropropylene).

The thermoplastic PVDF polymer may be a copolymer, a terpolymer or a blend of a PVDF homopolymer or copolymer with one or more other polymers that are compatible with the PVDF copolymer. PVDF copolymers and terpolymers of the present disclosure can be those in which vinylidene fluoride units comprise greater than 75 percent of the total weight of all the monomer units in the polymer, such as greater than 80 percent of the total weight of the units.

In certain embodiments, the thermoplastic PVDF can be those consisting essentially of at least 75 weight percent, at least 80 weight percent, and at least 85 weight percent of vinylidene fluoride copolymerized with one or more comonomers selected from the group consisting of tetrafluoroethylene, trifluoroethylene, chlorotrifluoroethylene, hexafluoropropene, vinyl fluoride, pentafluoropropene, tetrafluoropropene, trifluoropropene, perfluoromethyl vinyl ether, perfluoropropyl vinyl ether and any other monomer that would readily copolymerize with vinylidene fluoride.

Copolymers, terpolymers and higher polymers of vinylidene fluoride can be made by reacting vinylidene fluoride with one or more monomers from the group consisting of vinyl fluoride, trifluoroethene, tetrafluoroethene, one or more of partly or fully fluorinated alpha-olefins such as 3,3,3-trifluoro-1-propene, 1,2,3,3,3-pentafluoropropene, 3,3,3,4,4-pentafluoro-1-butene, and hexafluoropropene, the partly fluorinated olefin hexafluoroisobutylene, perfluorinated vinyl ethers, such as perfluoromethyl vinyl ether, perfluoroethyl vinyl ether, perfluoro-n-propyl vinyl ether, and perfluoro-2-propoxypropyl vinyl ether, fluorinated dioxoles, such as perfluoro(1,3-dioxole) and perfluoro(2,2-dimethyl-1,3-dioxole), allylic, partly fluorinated allylic, or fluorinated allylic monomers, such as 2-hydroxyethyl allyl ether or 3-allyloxypropanediol, and ethene or propene.

In certain embodiments, up to 25 percent, or up to 20 percent or up to 15 weight percent of hexafluoropropene (HFP) units can be present in the vinylidene fluoride copolymer and at least 2 weight percent HFP comonomer contents.

Preferably the PVDF copolymer does not contain a bromine or iodine atom (the comonomers do not have bromine or iodine atoms).

The PVDF for use in the embodiments of the present disclosure has a high molecular weight. High molecular weight means the thermoplastic PVDF having a melt viscosity of greater than 25 kP, preferably 26 kP or greater, more preferably 27 kP or greater and less than 45 kP, more preferably less than 43 kP. The thermoplastic PVDF can have a melt viscosity in the range of 25 kP or greater to less than 45 kP, or 26 kP to less than 45 kP, or 27 kP to less than 45 kP, or preferably 25 kP to 43 kP or 26 kP to 43 kP or 27 to 43 kP, or more preferably greater than 25 kP to 40 kP or from greater than 30 kP to less than 45 kP according to ASTM method D-3835 measured at 232°C and 100 s⁻¹.

Thermoplastic PVDF used in accordance with embodiments of the present disclosure can generally be prepared by means known in the art, using aqueous free-radical emulsion polymerization, although suspension, solution, and supercritical CO₂ polymerization processes may also be used.

The PVDF emulsion polymerization can result in a latex generally having a solids level of 10 to 60 weight percent, such as 10 to 50 percent, and having a latex weight average particle size of less than 500 nm, such as less than 400 nm and less than 300 nm. The weight average particle size can be at least 20 nm, such as at least 50 nm. Preferably the latex is made without fluorosurfactant.

The PVDF latex may be dried to a powder by means known in the art, such as, but not limited to, spray drying, freeze-drying, coagulating, and drum drying with a thermoplastic PVDF powder particle size range D50 of between 0.5 and 50 micrometer (micron), preferably, 0.5 and 20 micrometer (micron), more preferably between 1 and 10 micrometer (microns).

In certain embodiments, thermoplastic PVDF can include but are not limited to emulsion copolymers comprising thermoplastic PVDF, a powder particle size range D50 of between 0.5 and 20 micrometer (micron), preferably 1 micrometer (micron) to less than 12 micrometer (microns) and a melt viscosity of between from greater than 25 kP, preferably 26 kP or greater, or 27 kP or greater and less than 45 kP, preferably less than 43 kP. The thermoplastic PVDF can have a melt viscosity in the range of 25 kP or greater to less than 45 kP, or 26 kP to less than 45 kP, or 27 kP to less than 45 kP, or preferably 2 5kP to 43 kP or 26 kP to 43 kP or 27 kP to 43 kP, or more preferably greater than 25 kP to 40 kP, or from greater than 30 kP to less than 45 kP, and from 27 kP to 45 kP, and from 30 kP to 45 kP, and from 35 kP to 45 kP according to ASTM method D-3835 measured at 232°C and 100 s⁻¹.

Copolymers of VDF and HFP are preferred. Copolymers of VDF and HFP have a relatively low surface energy. It is noted that thermoplastic PVDF has a lower surface energy than other polymers such as polyolefins. Lower surface energy can lead to better wetting and a more uniform dispersion. Additionally, thermoplastic PVDF copolymers can have a lower crystallinity and therefore can be processed at a lower temperature in a melt process.

### INTERFACIAL AGENT

The polymer process aid (A/B) also contains at least one interfacial agent (B) that preferably comprises from 80 to 1 weight percent based on the of the total weight percent of A and B The interfacial agent (B) refers to any product which blended with thermoplastic PVDF (A) improves the effectiveness of polymer process aid (A/B). The combination of thermoplastic PVDF (A) and interfacial agent (B) to produce polymer process aids composition (A/B) can be accomplished using any means known in the art such as with pre-blended powders or compressed pellets produced from pre-blended powders.

Examples of interfacial agent (B) include but are not limited to: a) silicones; b) silicone-polyether copolymers; c) aliphatic polyesters, such as polybutylene adipate, poly lactic acid and polycaprolactones; d) aromatic polyesters; e) polyethers, such as, for example, polyether polyols and polyalkylene oxides, such as, for example, defined in U.S. Pat. No. 4,855,360; f) amine oxides, such as, for example, octyldimethylamine oxide; g) carboxylic acids, such as, for example, hydroxybutanedioic acid; h) fatty acid esters, such as sorbitan monolaurate; and combinations thereof.

In regard to interfacial agent (B), when B comprises polyoxy ethylene glycol, commonly referred to as polyethylene glycol (PEG). Preferably, the number-average molecular weight Mn is between 1000 and 15 000 g/mol (the latter can, for example, be determined using melt viscosity measurements) and the melting point is between 50 and 80° C. Examples of PEG include but are not limited to Pluriol E^{®} from BASF or Polyglycol^{®} from Clariant. Blend of two or more interfacial agents including two or more polyethers can be used as the interfacial agent B of the invention. These PEGs and other examples of PEG are disclosed in U.S. Pat. No. 5,587,429 and U.S. Pat. No. 5,015,693.

The interfacial agent can be polyethylene glycol normally in solid form and having a repeating unit of -(OCH₂CH₂)ₙ-, where n is an integer between 20 and 210; Carbowax^{®} 1000, having a number average molecular weight of approximately 1000 g/mol; Carbowax^{®} 3350, having a number-average molecular weight of approximately 3500 g/mol; Carbowax^{®} 8000, having a number-average molecular weight of approximately 8000 g/mol; Polyglycol^{®} 8000 from Clariant, having a number average molecular weight of between 7000 and 9000 g/mol. The polycaprolactone preferably has a number-average weight of between 1000 and 32000, preferably between 2000 and 10 000 and more preferably still between 2000 and 4000 g/mol.

### COMPOSITION OF POLYMER PROCESS AID

The thermoplastic PVDF (A) and interfacial agent (B) used to produce the polymer process aid (A/B) are normally combined in the form of a powder. The powders are proportioned and blended in a suitable powder mixer until homogeneous. The blended powders can be used as a polymer process aid in powder form, or converted into a granular product. Granular products are often preferred due to ease of handling. The granular products produced typically have D50 powder particle sizes typically ranging from 120 to 500 micrometer (microns).

Without being committed to any one interpretation, it is possible that the interfacial agent (B) interacts physically and/or chemically with thermoplastic PVDF (A) to stabilize the thermoplastic PVDF and/or help maintain a desirable particle size in the melt in a high shear environment. Advantageously (B) is a polyether, preferably chosen from oligomers or polymers having alkylene oxide (for example ethylene oxide or propylene oxide) units, or a polycaprolactone.

In regard to the process aid, the latter comprises, according to a first embodiment, at least one thermoplastic PVDF (A) and at least one interfacial agent (B). The respective proportions by weight of (A) and (B) can be as defined in claim 8 or such that (A/B) is between 10/90 and 90/10, preferably between 30/70 and 70/30 and better still between 40/60 and 60/40.

In most cases, the level (amount) of polymer process aid (A/B) used is relatively small compared to the polymer to be extruded (E), commonly in the range of 50 to 3000 ppm by weight of thermoplastic polymer to be extruded, preferably polyolefin polymer (E), and more typically in the range of 100 to 1500 ppm by weight. Depending on application, the level of polymer process aid found useful can be below 50 ppm and at times, above 3000 ppm by weight.

### MASTERBATCH

In regards to the masterbatch (D), at least one polymer process aid comprised of thermoplastic PVDF (A) and (B), are diluted in a polyolefin carrier polymer (C) to give a masterbatch, the proportion by weight of (A) and (B) is from 0.5 to 20 percent, preferably from 1 to 10 percent, preferentially from 1.5 to 10 percent, more preferably still from 2 to 10 percent, per 80 to 99.5 percent, preferably 90 to 99 percent, preferentially 90 to 98.5 percent, more preferably still 90 to 98 weight percent, respectively of (C).

The process aid is prepared by blending at least one thermoplastic PVDF (A) and at least one interfacial agent (B). This blend can subsequently be used as is or else can be diluted in a polyolefin carrier polymer (C) in the form of a masterbatch (D). The blend of (A) and of (B) or else (D) is provided in the form of a powder or granules or pellets. The preparation of the masterbatch (D) can use any method or process known in the art with the preferred method described in U.S. Pat. 8,501,862.

The masterbatch is normally produced by extrusion compounding to produce a product in pellet form, but embodiments other than pellets are included provided it is comprised of the correct components in the defined ratios.

### CARRIER FOR MASTER BATCH

The carrier polymer (C) is a polyolefin, and for example, can be a polyethylene, such as a low-density polyethylene (LDPE), a high-density polyethylene (HDPE), a linear low-density polyethylene (LLDPE), a medium-density polyethylene (MDPE), or ultra-high-density polyethylene (UHDPE) or combinations thereof. It can be a polyethylene obtained using a catalyst of the metallocene type or more generally a 'single-site' catalyst, a catalyst of Phillips type or a catalyst of Ziegler-Natta type; a polypropylene, in particular an iso- or syndiotactic polypropylene; a biaxially-oriented polypropylene; a polybutene (obtained from 1-butene); a poly(3-methylbutene) or a poly(4-methylpentene); Blends of two or more polyolefins, for example a blend of an LLDPE with an LDPE can be used as the carrier (C). In the preferred application, (C) has a melt viscosity equal to or lower than (D).

The selection of a suitable polyolefin carrier polymer (C) for the masterbatch (D) normally addresses several concerns including miscibility in the polyolefin polymer to be used in, and ability to disperse well without gel formation. One would expect (D) prepared with a low Melt Index (high melt viscosity) carrier polymer would generate gels, or have the potential of generating gels if introduced into a polyolefin polymer of a higher Melt Index. The gel formed specifically would be comprised of a large undispersed agglomerate of (D). Normally, the carrier polymer is selected to have an equal to or higher Melt Index than the polyolefin polymer to be used in. A typical Melt Index range for a carrier polymer is between 2 and 20, and a masterbatch produced with this polyethylene carrier polymer (C) would be most suitable in polyolefin polymer having a Melt Index at or below 2.

### USE OF MASTERBATCH

Masterbatch (D) can be used in any manner known in the art and is typically either preblended with polyolefin polymer (E) in pellet or powder form, or fed individually using suitable equipment such as loss and weight feeders, or pre-compounded to produce an extrudable compound.

The masterbatch is particularly advantageous when used as a PPA for thermoplastic polymers, such as polyethylenes of high molecular weight and/or exhibiting a narrow molecular weight distribution (typically such that the polydisperity index is less than 3, rather less than 2.5 and better still less than 2.2). The masterbatch is particularly useful for the extrusion of a polyolefin, in particular a polyethylene, in the form of a film. The polyethylene can comprise a filler, that is to say can comprise dispersed organic or inorganic particles. The inorganic filler can be, for example, a silica, an alumina, a Zeolite, a titanium oxide, a carbonate (for example, sodium carbonate or potassium carbonate), hydrotalcite, talc, a zinc oxide, a magnesium oxide or a calcium oxide, a diatomaceous earth, and carbon black. It can also be an inorganic pigment. The organic particles can be, for example, those of an organic pigment or else of an antioxidant.

The invention also includes an extrudable compound produced by combining the polymer process aid (A/B), and a polyolefin polymer (E). When (A/B) are diluted in a polyolefin polymer (E) to give an extrudable compound, the total of (A) plus (B) by weight will be from 50 to 3000 ppm, preferably from 100 to 2000 ppm by weight, more preferably from 200 to 1000 ppm by weight, even more preferably from 300 to 800 ppm of the total weight. The remainder of the extrudable compound comprises the polyolefin polymer (E) and possibly other additives. The process aid can be prepared by blending at least one thermoplastic PVDF (A) and at least one interfacial agent (B). This polymer process aid can subsequently be used as is or else can be diluted in a carrier polymer (C) (such as a polyolefin) to form a masterbatch (D). The blend of (A) and of (B) or else the masterbatch (D) is provided in the form of a powder or granules or pellets. The preparation of the masterbatch can use any method or process known in the art with the preferred method described herein.

### EXPERIMENTAL EXAMPLES

All experiments described herein were performed using masterbatches prepared with the polymer process aid being studied. The carrier polyolefin polymer used in all masterbatches is identified as Certene^{®} 2 MI linear low-density polyethylene from Muehlstein International, Wilton Conn.USA. The interfacial agent used for all experimental masterbatches containing an interfacial agent is Carbowax^{®} Sentry PEG 8000 powder from Dow Chemical Company. The commercial comparative PPA identified as Dynamar^{®} FX5920A contains an interfacial agent. The 1.0 MI LLDPE and 2.0 MI LLDPE used were produced without any PPA addition. When an antioxidant package was needed, it consisted of 0.4 weight percent Irganox^{®} 1076 and 0.1 weight percent Irgafos^{®} 168 of the masterbatch formulation. The antioxidants were tumble bended with the polymer process aid, and then fed as a single powder during twin screw compounding.

All thermoplastic PVDF used to produce a masterbatch will have a designation of FP for "Fluoropolymer" followed by a unique number for that particular thermoplastic PVDF. A short description of the thermoplastic PVDF to be described is as follows: (FP1) is a commercial polymer process aid containing a heterogeneous thermoplastic PVDF that uses the technology of the invention described in U.S. 8,501,862. (FP2) through (FP7) and (FP13) are homogeneous thermoplastic PVDF comprised of a PVDF/HFP copolymers having similar HFP content and varying in viscosity. (FP8) and (FP9) are homogeneous thermoplastic PVDF comprised of PVDF/HFP copolymers having similar HFP contents but vary in viscosity. (FP10) and (FP11) are heterogeneous thermoplastic PVDF comprised of PVDF/HFP copolymers having similar HFP contents but vary in viscosity. (FP12) is similar to (FP8) but having a different HFP content.

In addition to the experimental polymer process aids contained in Table 1, a commercially available polymer process aid containing a fluoroelastomer identified as Dynamar^{®} FX5920A (3M) is included.

The following table describes the thermoplastic PVDF used to prepare masterbatches.

**Table 1 PPA Masterbatch Summary**

| Fluoropolymer Designation | Properties of Fluoropolymers | | | | |
|---|---|---|---|---|---|
| | Type Example | Thermoplastic Type | Melting Point (°C) | HFP Content (%) | Melt Viscosity (kP) |
| FP1 | Comparative | heterogeneous | 168 | 10.0 | 23.5 |
| FP2 | Comparative | homogeneous | 153 | 4.5 | 21.1 |
| FP3 | Invention | homogeneous | 153 | 4.5 | 36.5 |
| FP4 | Invention | homogeneous | 153 | 4.5 | 31.4 |
| FP5 | Invention | homogeneous | 153 | 4.5 | 34.2 |
| FP6 | Invention | homogeneous | 153 | 4.5 | 40.3 |
| FP7 | Comparative | homogeneous | 153 | 4.5 | 45.3 |
| FP8 | Invention | homogeneous | 126 | 16.0 | 29.2 |
| FP9 | Comparative | homogeneous | 127 | 16.5 | 15.5 |
| FP10 | Comparative | heterogeneous | 168 | 18.0 | 23.5 |
| FP11 | Comparative | heterogeneous | 168 | 18.0 | 11.0 |
| FP12 | Invention | heterogeneous | 168 | 10.0 | 29.2 |
| FP13 | Invention | homogeneous | 153 | 4.5 | 27.8 |
| Dynamar^{®} FX5920A | Comparative | elastomer | none | ≥ 40 | - |

HFP content was determined by first dissolving the samples in d-acetone at 50°C. The ¹H spectra were acquired on the Varian Mercury 300 (7.05 T) equipped with a Nalorac 5 mm quad probe at 50°C.

Polymer process aid samples were prepared by combining a thermoplastic PVDF powder and PEG powder at the desired ratio (55 PVDF/45 PEG) into a small sealed bag and shaking as described in U.S. Pat. 8,501,862.

The polymer process aids were converted to masterbatches by twin-screw compounding the polymer process aid with the polyolefin carrier polymer. A Leistritz 18 mm twin screw containing screws designed for good mixing and dispersion was used. Individual loss in weight feeders were used to feed the polymer process aid and the polyolefin carrier polymer directly into the twin screw feed throat. Barrel temperatures and feed rates were adjusted to maintain the melt temperature near 200°C. Vacuum venting was used to remove potential moisture. The masterbatch exited the twin screw through a strand die, cooled utilizing a water bath, passed through an air knife to facilitate drying, and then pelletized using a strand cutter. The masterbatches were all prepared at 2 weight percent polymer process aid.

Polymer process aids were evaluated by performing flat die extrusion studies. Flat die extrusions studies are considered useful as a tool to evaluate polymer process aid performance, and can be described as small scale extrusion of a strip or ribbon using a flat profile die. The benefits of using a flat die to study polymer process aid performance includes excellent shear rate control, ability to precisely record pressure and melt fracture changes, ease of performance and relatively low material demands.

Flat die extrusion studies were performed using a 3.8 cm (1.5 inch) Davis Standard extruder having a 3/1 compression ratio and a 24 to 1 L/D metering screw. The flat die, also referred to as a slot die, had dimensions of 50 mm by 0.5 mm and with a 10 mm land and contained a tapered feed section. The flat die had heater bands on the body and die for temperature control. The extruder and flat die were positioned downward at an angle of 20 to 30 degree to prevent the extrudate from contacting die surfaces.

A flat die study is started by performing a 25-minute purge using Dow Purge^{®} purge compound (from Dow Inc.). Purging is performed through the extruder and die with all temperature zones set at 200°C (392°F) and a screw speed of 60 rpm. This is immediately followed by purging using 1.0 MI LLDPE (Linear low-density polyethylene) polymer to be used in the experiment. Purging using the LLDPE polymer continues until a steady state pressure is achieved and a uniform melt fracture is observed. The screw speed is then adjusted to 21.3 rpm to achieve a calculated shear rate of 300 s⁻¹. Extrusion using these conditions continues for an additional 20 minutes until steady state is obtained. At steady state, the extruded ribbon displays a uniform melt fracture on all surfaces and described as 100 percent melt fracture. Melt pressure should also plateau once steady state is reached.

Prior to starting a test, a "pellet blend" consisting of LLDPE and masterbatch is prepared. The pellet blend is comprised of the LLDPE polymer and the masterbatch containing PPA. Polymers used in melt processing are generally provided in the form of a pellet. The pellet blend yields a composite PPA level of 200 ppm by weight with enough produced to allow the test to run for at least one hour. The LLDPE used is a typical 1MI LLDPE blown film grade.

The test begins with the addition of the pellet blend into the hopper just as the hopper has "run empty", which is simply the time when the screw becomes visible. Measurements of visible melt fracture and melt pressure start immediately after addition of the pellet blend and these measurements are recorded every minute until test completion. Percent melt fracture is defined as the amount of visible melt fracture (as seen by the eye) remaining on the ribbon as it exits the extrusion die. Melt pressure is recorded using a melt transducer located in the extrusion die. The ribbon will display 100 percent melt fracture and melt pressures will remain stable until the masterbatch reaches the extrusion die, at which time, the melt pressure drops, and visible melt fracture is reduced. The test is performed until melt fracture is eliminated and pressure has re-stabilized, or after one hour of testing. At the completion of testing, the purging sequence as previously described is repeated in preparation of the next experiment.

### Example 1

Following the protocols described above, a sample of thermoplastic PVDF labelled (FP3) in Table 1 was evaluated as a PPA masterbatch containing 2 percent of a 55/45 weight ratio of PVDF (FP3) / 8000 MW PEG. Test results indicate a pressure drop from 11.066 MPa (1605 psi) to 6.6 Mpa (961 psi) in 30 minutes and melt fracture elimination in 21 minutes.

### Example 2

This example uses thermoplastic PVDF (FP4) in the form of a masterbatch defined in table 1 and by the technique noted in example 1. The ratio of thermoplastic PVDF to interfacial agent is 55/45 parts by weight of PVDF (FP4) to PEG 8000 interfacial agent. Test results indicate a pressure drop from 11.47 MPa (1664 psi) to 6.7 MPa (972 psi) in 30 minutes and melt fracture elimination in 20 minutes.

### Example 3

This example uses thermoplastic fluoropolymer (FP5) in the form of a masterbatch defined in table 1 and by the technique noted in example 1. The ratio of thermoplastic PVDF to interfacial agent is 55/45 parts by weight of PVDF (FP5) to PEG 8000 interfacial agent. Test results indicate a pressure drop from 11.53 MPa (1672 psi) to 6.7 MPa (972 psi) in 30 minutes and melt fracture elimination in 23 minutes.

### Example 4

This example uses thermoplastic fluoropolymer (FP6) in the form of a masterbatch defined in table 1 and by the technique noted in example 1. The ratio of thermoplastic PVDF to interfacial agent is 55/45 parts by weight of PVDF (FP6) to PEG 8000 interfacial agent. Test results indicate a pressure drop from 11.53 MPa (1672 psi) to 7.3 MPa (1065 psi) in 30 minutes and melt fracture elimination in 22 minutes.

### Example 5

This example uses thermoplastic fluoropolymer (FP8) in the form of a masterbatch defined in table 1 and by the technique noted in example 1. The ratio of thermoplastic PVDF to interfacial agent is 55/45 parts by weight of PVDF (FP8) to PEG 8000 interfacial agent. Test results indicate a pressure drop from 11.5 MPa (1674 psi) to 6.75 MPa (979 psi) in 30 minutes and melt fracture elimination in 20 minutes.

### Example 6

This example uses thermoplastic fluoropolymer (FP12) in the form of a masterbatch defined in table 1 and by the technique noted in example 1. The ratio of thermoplastic PVDF to interfacial agent is 55/45 parts by weight of PVDF (FP12) to PEG 8000 interfacial agent. Test results indicate a pressure drop from 11.35 MPa (1647 psi) to 6.56 MPa (952 psi) in 30 minutes and melt fracture elimination in 18 minutes.

### Example 7

This example uses thermoplastic fluoropolymer (FP3) in the form of a masterbatch defined in table 1 and by the technique noted in example 1. The ratio of thermoplastic PVDF to interfacial agent is 55/45 parts by weight of PVDF (FP3) to PEG 8000 interfacial agent. Example 7 is identical to Example 1 with the exception that the thermoplastic PVDF (FP3) was jet milled to reduce the powder particle size of the thermoplastic PVDF powder. A comparison of the powder before and after jet milling can be found in the following:

| Thermoplastic PVDF | Percentiles (units in micrometer (microns)) | | |
|---|---|---|---|
| | D10 | D50 | D99 |
| Un-milled | 3.8 | 8.1 | 49.0 |
| Milled | 2.8 | 5.9 | 22.1 |

Test results indicate a pressure drop from 11.5 MPa (1667 psi) to 6.47 MPa (939 psi) in 30 minutes and melt fracture elimination in 21 minutes with results similar to Example 1.

### Example 8

This example uses thermoplastic PVDF (FP13) in the form of a masterbatch defined in table 1 and by the technique noted in example 1. The ratio of thermoplastic PVDF to interfacial agent is 55/45 parts by weight of PVDF (FP13) to PEG 8000 interfacial agent. Test results indicate a pressure drop from 11.53 MPa (1658 psi) to 6.42 MPa (931 psi) in 30 minutes and melt fracture elimination in 21 minutes.

Table 2 is a summary of the melt fracture elimination times described as examples of the invention ("invention example"). PPA's considered invention examples are described herein as those PPA's providing melt fracture elimination times at or below 23 minutes.

| Invention Example Summary: Table 2 | | | | |
|---|---|---|---|---|
| Example | Melt Fracture Elimination Time | | | |
| | Fluoropolymer | MV (kP) | Patent Example | Time to Melt Fracture elimination (minutes) |
| 1 | FP3 | 36.5 | Invention | 21 |
| 2 | FP4 | 31.4 | Invention | 20 |
| 3 | FP5 | 34.2 | Invention | 23 |
| 4 | FP6 | 40.3 | Invention | 22 |
| 5 | FP8 | 29.2 | Invention | 20 |
| 6 | FP12 | 29.2 | Invention | 18 |
| 7 | FP3-milled | 36.5 | Invention | 21 |
| 8 | FP13 | 27.8 | Invention | 21 |

### Comparative 1

This example uses thermoplastic PVDF (FP1) in the form of a masterbatch defined in table 1 and by the technique noted in example 1. The ratio of thermoplastic PVDF to interfacial agent is 55/45 parts by weight of PVDF (FP1) to PEG 8000 interfacial agent. Test results indicate a pressure drop from 11.36 MPa (1648 psi) to 6.87 MPa (996 psi) in 30 minutes and melt fracture elimination in 29 minutes.

### Comparative 2

This example uses thermoplastic PVDF (FP2) in the form of a masterbatch defined in table 1 and by the technique noted in example 1. The ratio of thermoplastic PVDF to interfacial agent is 55/45 parts by weight of PVDF (FP2) to PEG 8000 interfacial agent. Test results indicate a pressure drop from 11.14 MPa (1616 psi) to 6.96 MPa (1010 psi) in 30 minutes and melt fracture elimination in 26 minutes.

### Comparative 3

This example uses thermoplastic PVDF (FP7) in the form of a masterbatch defined in table 1 and by the technique noted in example 1. The ratio of thermoplastic PVDF to interfacial agent is 55/45 parts by weight of PVDF (FP7) to PEG 8000 interfacial agent. Test results indicate a pressure drop from 11.5 MPa (1668 psi) to 7.85 MPa (1139 psi) in 30 minutes and melt fracture elimination in 29 minutes.

### Comparative 4

This example uses thermoplastic PVDF (FP9) in the form of a masterbatch defined in table 1 and by the technique noted in example 1. The ratio of thermoplastic PVDF to interfacial agent is 55/45 parts by weight of PVDF (FP9) to PEG 8000 interfacial agent. Test results indicate a pressure drop from 11.58 MPa (1679 psi) to 6.92 MPa (1004 psi) in 30 minutes and melt fracture elimination in 27 minutes.

### Comparative 5

This example uses thermoplastic PVDF (FP10) in the form of a masterbatch defined in table 1 and by the technique noted in example 1. The ratio of thermoplastic PVDF to interfacial agent is 55/45 parts by weight of PVDF (FP10) to PEG 8000 interfacial agent. Test results indicate a pressure drop from 11.15 MPa (1617 psi) to 7.14 MPa (1036 psi) in 30 minutes and melt fracture elimination in 24 minutes.

### Comparative 6

This example uses thermoplastic PVDF (FP11) in the form of a masterbatch defined in table 1 and by the technique noted in example 1. The ratio of thermoplastic PVDF to interfacial agent is 55/45 parts by weight of PVDF (FP11) to PEG 8000 interfacial agent. Test results indicate a pressure drop from 11.27 MPa (1635 psi) to 7.84 MPa (1137 psi) in 30 minutes and melt fracture elimination in 45 minutes.

### Comparative 7

This example uses only the interfacial agent in the form of a masterbatch defined in table 1 and by the technique noted in example 1. The ratio of thermoplastic PVDF to interfacial agent is 0/100 parts by weight of PVDF to PEG 8000 interfacial agent. Test results indicate a pressure drop from 1636 MPa (1636 psi) to 8.54 MPa (1239 psi) in 30 minutes and melt fracture elimination in 45 minutes.

### Comparative 8

This example uses only LLDPE without any PPA masterbatch and tested by the technique noted in example 1. No thermoplastic PVDF or interfacial agent is added. Test results indicate no pressure drop and melt fracture remained at 100 percent through 40 minutes of testing.

### Comparative 9

This example uses polymer process aid **(FX5920A)** in the form of a masterbatch defined in table 1 and by the technique noted in example 1. **(FX5920A)** is described as a commercial polymer processing aid comprised of a fluoroelastomer and an interfacial agent. Test results indicate a pressure drop from 11.09 MPa (1608 psi) to 7.74 MPa (1123 psi) in 30 minutes and melt fracture elimination in 40 minutes.

Table 3 is a summary of the melt fracture elimination times for the comparative examples. PPA's considered comparative examples are described herein as those PPA's providing melt fracture elimination times above 23 minutes.

| Comparative Example Summary - Table 3 | | | | |
|---|---|---|---|---|
| Comparative | Melt Fracture Elimination Time | | | |
| | Fluoropolymer | MV (kP) | Example | Time to Melt Fracture elimination (minutes) |
| 1 | FP1 | 23.5 | Comparative | 29 |
| 2 | FP2 | 21.1 | Comparative | 26 |
| 3 | FP7 | 45.3 | Comparative | 29 |
| 4 | FP9 | 15.5 | Comparative | 27 |
| 5 | FP10 | 23.5 | Comparative | 24 |
| 6 | FP11 | 11.0 | Comparative | 45 |
| 7 | Interfacial agent Only | | Comparative | 45 |
| 8 | No PPA (No fluoropolymer or interfacial agent ) | | Comparative | Full Melt Fracture (no elimination) |
| 9 | Dynamar^{®} FX5920A | | Comparative | 40 |

Data found in Table 2 and Table 3 was plotted showing time to zero percent melt fracture versus fluoropolymer viscosity. This plot can be found in Figure 1. The plot clearly shows the PPA of this invention providing better melt fracture elimination performance in the claimed high viscosity region.

## Claims

1. A polymer process aid composition (A/B) containing a thermoplastic PVDF (A) that is comprised of a PVDF copolymer having at least of 75 wt.% VDF, and having a melt viscosity of between greater than 25 kP and less than 45 kP, preferably between 26 kP and 43 kP measured by capillary rheometry according to ASTM method D-3835 measured at 232°C and a shear rate of 100 s⁻¹, and at least one interfacial agent (B) that is not miscible in thermoplastic PVDF (A), wherein (B) is selected from the group consisting of:
a) silicones;
b) silicone-polyether copolymers;
c) aliphatic polyesters, such as polybutylene adipate, polylactic acid and polycaprolactones;
d) aromatic polyesters;
e) polyethers such as polyether polyols and polyalkylene oxides;
f) amine oxides such as octyldimethylamine oxide;
g) carboxylic acids such as hydroxybutanedioic acid;
h) fatty acid esters such as sorbitan monolaurate; optionally diluted in a polyolefin carrier polymer (C); and
i) combination thereof.

2. The polymer process aid of claim 1, in which the thermoplastic PVDF (A) is a homogeneous copolymer of VDF with at least one other comonomer.

3. The polymer process aid of claim 1, in which the thermoplastic PVDF (A) is a heterogeneous thermoplastic copolymer of VDF with at least one other comonomer.

4. The polymer process aid of claim 1 wherein the interfacial agent (B) is selected from the group consisting of:
c) aliphatic polyesters, such as polybutylene adipate, polylactic acid and polycaprolactones;
e) polyethers such as polyether polyols and polyalkylene oxides; and
i) combination thereof.

5. The polymer process aid of any one of claims 1 to 4 in which the thermoplastic PVDF(A) is a VDF/HFP copolymer comprised of 1 to 25 wt.% of HFP, preferably 1 to 20 wt.%, more preferably 2 to 20 wt.%.

6. The polymer process aid of any one of claims 1 to 4, in which the viscosity of the thermoplastic PVDF (A) is at or above 26 kP when measured by capillary rheometry at 232°C and 100 s⁻¹, preferably above 27 kP when measured by capillary rheometry at 232°C and 100 s⁻¹.

7. The polymer process aid of any one of claims 1 to 4, in which the viscosity of the thermoplastic PVDF (A) is between above 30 kP and below 45 kP.

8. The polymer process aid of any one of claims 1 to 4 wherein the ratio of the thermoplastic PVDF (A) to interfacial agent (B) is from 99 to 20 wt.% thermoplastic PVDF (A) to 1 to 80 wt.% interfacial agent (B), preferably 95 to 30 wt.% thermoplastic PVDF (A) and 5 to 70 wt.% interfacial agent (B), more preferably from 95 to 40 wt.% thermoplastic PVDF (A) and 5 to 60 wt.% interfacial agent (B), preferably from 95 to 60 wt.% thermoplastic PVDF (A) and 5 to 40 wt.% interfacial agent (B) based on combined weight of (A) plus (B).

9. The polymer process aid of any one of claims 1 to 4 in which the interfacial agent (B) comprises oligomers or polymers having alkylene oxide units.

10. The polymer process aid of claim 9 wherein the interfacial agent (B) comprises a polyethylene glycol (PEG).

11. The polymer process aid of any one of claims 1 to 4 wherein the interfacial agent (B) comprises oligomers and /or polymers of polycaprolactone.

12. The polymer process aid of any one of claims 1 to 4 wherein polymer process aid comprises of two or more interfacial agents (B).

13. A masterbatch (D) comprised of the process aid of claim 1 dispersed in a polyolefin carrier polymer (C), wherein the amount of the composition (A/B) is of 0.5 to 20 and the amount of (C) is from 80 to 99.5 weight percent of the masterbatch.

14. The masterbatch (D) of claim 13 where the polyolefin carrier polymer (C) is a selected from the group consisting of LLDPE, LDPE, MDPE, UHDPE or HDPE or combinations thereof.

15. The masterbatch (D) of claim 13 where the polymer process aid of claim 1 comprises from 1 to 15%, more preferably from 1 to 10 wt.%, most preferably from 1 to 8 wt.% of the masterbatch composition.

16. A polyolefin polymer (E) containing the polymer process aid of any one of claims 1 to 4.

17. The polyolefin polymer (E) of claim 16 wherein the amount of polymer process aid is from 50 to 3000 ppm, more preferably from 50 to 2000 ppm, and most preferably from 100 to 1500 ppm by weight of polymer to be extruded.

18. An extruded film containing the polymer process aid of any one of claims 1 to 4.

19. An extruded film containing the polyolefin polymer (E) of claim 17.

20. A method of extruding comprising the steps of adding the polymer processing aid of any one of claims 1 to 4 to a polyolefin polymer to be extruded to form a mixture and extruding the mixture to form a film or an article selected from the group consisting of an extruded tube, pipe, cable insulation, cable jacket, or sheet.

21. A method of extruding a film comprising the steps of adding the masterbatch of claim 13 to a polyolefin polymer to form a mixture and extruding the mixture to form a film or an article selected from the group consisting of an extruded tube, pipe, cable insulation, cable jacket, or sheet.

## Patentansprüche

1. Polymerprozesshilfsmittelzusammensetzung (A/B) enthaltend ein thermoplastisches PVDF (A), das aus einem PVDF-Copolymer mit wenigstens 75 Gew.-% VDF besteht und eine Schmelzeviskosität von zwischen mehr als 25 kP und weniger als 45 kP, vorzugsweise zwischen 26 kP und 43 kP, gemessen durch Kapillarrheometrie nach ASTM-Verfahren D-3835, gemessen bei 232 °C und einer Scherrate von 100 s⁻¹, aufweist, und wenigstens ein Grenzflächenmittel (B), das nicht mit thermoplastischem PVDF (A) mischbar ist, wobei (B) ausgewählt ist aus der Gruppe bestehend aus:
a) Siliconen;
b) Silicon-Polyether-Copolymeren;
c) aliphatischen Polyestern, wie z.B. Polybutylenadipat, Polymilchsäure und Polycaprolactonen;
d) aromatischen Polyestern;
e) Polyethern, wie z.B. Polyetherpolyolen und Polyalkylenoxiden;
f) Aminoxiden, wie z.B. Octyldimethylaminoxid;
g) Carbonsäuren, wie z.B. Hydroxybutandisäure;
h) Fettsäureestern, wie z.B. Sorbitanmonolaurat; gegebenenfalls verdünnt in einem Polyolefin-Trägerpolymer (C); und
i) Kombination davon.

2. Polymerprozesshilfsmittel nach Anspruch 1, wobei das thermoplastische PVDF (A) ein homogenes Copolymer von VDF mit wenigstens einem anderen Comonomer ist.

3. Polymerprozesshilfsmittel nach Anspruch 1, wobei das thermoplastische PVDF (A) ein heterogenes thermoplastisches Copolymer von VDF mit wenigstens einem anderen Comonomer ist.

4. Polymerprozesshilfsmittel nach Anspruch 1, wobei das Grenzflächenmittel (B) ausgewählt ist aus der Gruppe bestehend aus:
c) aliphatischen Polyestern, wie z.B. Polybutylenadipat, Polymilchsäure und Polycaprolactonen;
e) Polyethern, wie z.B. Polyetherpolyolen und Polyalkylenoxiden; und
i) Kombination davon.

5. Polymerprozesshilfsmittel nach einem der Ansprüche 1 bis 4, wobei das thermoplastische PVDF (A) ein VDF/HFP-Copolymer ist, das aus 1 bis 25 Gew.-% HFP, vorzugsweise 1 bis 20 Gew.-%, bevorzugter 2 bis 20 Gew.-%, besteht.

6. Polymerprozesshilfsmittel nach einem der Ansprüche 1 bis 4, wobei die Viskosität des thermoplastischen PVDF (A) bei oder über 26 kP liegt, wenn gemessen durch Kapillarrheometrie bei 232 °C und 100 s⁻¹, vorzugsweise über 27 kP, wenn gemessen durch Kapillarrheometrie bei 232 °C und 100 s⁻¹.

7. Polymerprozesshilfsmittel nach einem der Ansprüche 1 bis 4, wobei die Viskosität des thermoplastischen PVDF (A) zwischen über 30 kP und unter 45 kP liegt.

8. Polymerprozesshilfsmittel nach einem der Ansprüche 1 bis 4, wobei das Verhältnis des thermoplastischen PVDF (A) zu Grenzflächenmittel (B) von 99 bis 20 Gew.-% thermoplastisches PVDF (A) zu 1 bis 80 Gew.-% Grenzflächenmittel (B), vorzugsweise 95 bis 30 Gew.-% thermoplastisches PVDF (A) zu 5 bis 70 Gew.-% Grenzflächenmittel (B), bevorzugter von 95 bis 40 Gew.-% thermoplastisches PVDF (A) zu 5 bis 60 Gew.-% thermoplastisches Grenzflächenmittel (B), vorzugsweise von 95 bis 60 Gew.-% thermoplastisches PVDF (A) zu 5 bis 40 Gew.-% Grenzflächenmittel (B), bezogen auf das Gesamtgewicht von (A) plus (B), beträgt.

9. Polymerprozesshilfsmittel nach einem der Ansprüche 1 bis 4, wobei das Grenzflächenmittel (B) Oligomere oder Polymere mit Alkylenoxideinheiten umfasst.

10. Polymerprozesshilfsmittel nach Anspruch 9, wobei das Grenzflächenmittel (B) ein Polyethylenglycol (PEG) umfasst.

11. Polymerprozesshilfsmittel nach einem der Ansprüche 1 bis 4, wobei das Grenzflächenmittel (B) Oligomere und/oder Polymere von Polycaprolacton umfasst.

12. Polymerprozesshilfsmittel nach einem der Ansprüche 1 bis 4, wobei das Polymerprozesshilfsmittel zwei oder mehr Grenzflächenmittel (B) umfasst.

13. Masterbatch (D), bestehend aus dem Prozesshilfsmittel nach Anspruch 1, dispergiert in einem Polyolefin-Trägerpolymer (C), wobei die Menge der Zusammensetzung (A/B) von 0,5 bis 20 beträgt und die Menge an (C) von 80 bis 99,5 Gew.-% des Masterbatchs beträgt.

14. Masterbatch (D) nach Anspruch 13, wobei das Polyolefin-Trägerpolymer (C) ausgewählt ist aus der Gruppe bestehend aus LLDPE, LDPE, MDPE, UHDPE oder HDPE oder Kombinationen davon.

15. Masterbatch (D) nach Anspruch 13, wobei das Polymerprozesshilfsmittel nach Anspruch 1 von 1 bis 15 Gew.-%, bevorzugter von 1 bis 10 Gew.-%, höchst bevorzugt von 1 bis 8 Gew.-% an der Masterbatch-Zusammensetzung umfasst.

16. Polyolefinpolymer (E), enthaltend das Polymerprozesshilfsmittel nach einem der Ansprüche 1 bis 4.

17. Polyolefinpolymer (E) nach Anspruch 16, wobei die Menge an Polymerprozesshilfsmittel von 50 bis 3000 ppm, bevorzugter von 50 bis 2000 ppm und höchst bevorzugt von 100 bis 1500 ppm, bezogen auf das Gewicht des zu extrudierenden Polymers, beträgt.

18. Extrudierte Folie, die das Polymerprozesshilfsmittel nach einem der Ansprüche 1 bis 4 enthält.

19. Extrudierte Folie, die das Polyolefinpolymer (E) nach Anspruch 17 enthält.

20. Extrusionsverfahren, umfassend die Schritte von Zugeben des Polymerprozesshilfsmittels nach einem der Ansprüche 1 bis 4 zu einem Polyolefinpolymer, das extrudiert werden soll, um ein Gemisch zu bilden, und des Extrudierens des Gemischs, um eine Folie oder einen Gegenstand ausgewählt aus der Gruppe bestehend aus einem/einer extrudierten Rohr, Schlauch, Kabelisolierung, Kabelmantel oder Bahn zu bilden.

21. Verfahren zum Extrudieren einer Folie, umfassend die Schritte des Zugebens des Masterbatchs nach Anspruch 13 zu einem Polyolefinpolymer, um ein Gemisch zu bilden, und Extrudierens des Gemischs, um eine Folie oder einen Gegenstand ausgewählt aus der Gruppe bestehend aus einem/einer extrudierten Rohr, Schlauch, Kabelisolierung, Kabelmantel oder Bahn zu bilden.

## Revendications

1. Composition d'adjuvant de fabrication polymère (A/B) contenant un PVDF thermoplastique (A) constitué d'un copolymère de PVDF contenant au moins 75 % en poids de VDF et présentant une viscosité à l'état fondu supérieure à 25 kP et inférieure à 45 kP, de préférence comprise entre 26 kP et 43 kP, mesurée par rhéométrie capillaire selon la méthode ASTM D-3835 à 232 °C et à un taux de cisaillement de 100 s⁻¹, et au moins un agent interfacial (B) non miscible dans le PVDF thermoplastique (A), dans laquelle (B) est choisi dans le groupe constitué par :
a) les silicones ;
b) les copolymères silicone-polyéther ;
c) les polyesters aliphatiques, tels que le poly(adipate de butylène), l'acide polylactique et les polycaprolactones ;
d) les polyesters aromatiques ;
e) les polyéthers, tels que les polyéthers polyols et les poly(oxydes d'alkylène) ;
f) les oxydes d'amine tels que l'oxyde d'octyldiméthylamine ;
g) les acides carboxyliques tels que l'acide hydroxybutanedioïque ;
h) les esters d'acides gras tels que le monolaurate de sorbitane ; facultativement dilués dans un polymère support polyoléfinique (C) ; et
i) une combinaison de ceux-ci.

2. Adjuvant de fabrication polymère selon la revendication 1, dans lequel le PVDF thermoplastique (A) est un copolymère homogène de VDF avec au moins un autre comonomère.

3. Adjuvant de fabrication polymère selon la revendication 1, dans lequel le PVDF thermoplastique (A) est un copolymère thermoplastique hétérogène de VDF avec au moins un autre comonomère.

4. Adjuvant de fabrication polymère selon la revendication 1, dans lequel l'agent interfacial (B) est choisi dans le groupe constitué par :
c) les polyesters aliphatiques, tels que le poly(adipate de butylène), l'acide polylactique et les polycaprolactones ;
e) les polyéthers, tels que les polyéthers polyols et les poly(oxydes d'alkylène) ; et
i) une combinaison de ceux-ci.

5. Adjuvant de fabrication polymère selon l'une quelconque des revendications 1 à 4, dans lequel le PVDF thermoplastique (A) est un copolymère VDF/HFP comprenant 1 à 25 % en poids de HFP, de préférence de 1 à 20 % en poids, et plus préférentiellement de 2 à 20 % en poids.

6. Adjuvant de fabrication polymère selon l'une quelconque des revendications 1 à 4, la viscosité du PVDF thermoplastique (A) étant supérieure ou égale à 26 kP, mesurée par rhéométrie capillaire à 232 °C et 100 s⁻¹, et de préférence supérieure à 27 kP, mesurée par rhéométrie capillaire à 232 °C et 100 s⁻¹.

7. Adjuvant de fabrication polymère selon l'une quelconque des revendications 1 à 4, la viscosité du PVDF thermoplastique (A) étant supérieure à 30 kP et inférieure à 45 kP.

8. Adjuvant de fabrication polymère selon l'une quelconque des revendications 1 à 4, dans lequel le rapport entre le PVDF thermoplastique (A) et l'agent interfacial (B) est de 99 à 20 % en poids de PVDF thermoplastique (A) pour 1 à 80 % en poids d'agent interfacial (B), de préférence de 95 à 30 % en poids de PVDF thermoplastique (A) et de 5 à 70 % en poids d'agent interfacial (B), plus préférentiellement de 95 à 40 % en poids de PVDF thermoplastique (A) et de 5 à 60 % en poids d'agent interfacial (B), de préférence de 95 à 60 % en poids de PVDF thermoplastique (A) et de 5 à 40 % en poids d'agent interfacial (B) par rapport au poids combiné de (A) plus (B).

9. Adjuvant de fabrication polymère selon l'une quelconque des revendications 1 à 4, dans lequel l'agent interfacial (B) comprend des oligomères ou des polymères comportant des motifs oxyde d'alkylène.

10. Adjuvant de fabrication polymère selon la revendication 9, dans lequel l'agent interfacial (B) comprend un polyéthylène glycol (PEG).

11. Adjuvant de fabrication polymère selon l'une quelconque des revendications 1 à 4, dans lequel l'agent interfacial (B) comprend des oligomères et/ou des polymères de polycaprolactone.

12. Adjuvant de fabrication polymère selon l'une quelconque des revendications 1 à 4, dans lequel l'agent interfacial polymère comprend au moins deux agents interfaciaux (B).

13. Mélange maître (D) constitué de l'adjuvant de fabrication selon la revendication 1 dispersé dans un polymère support polyoléfinique (C), dans lequel la quantité de la composition (A/B) est de 0,5 à 20 et la quantité de (C) est de 80 à 99,5 pour cent en poids du mélange maître.

14. Mélange maître (D) selon la revendication 13, dans lequel le polymère support polyoléfinique (C) est choisi dans le groupe constitué par LLDPE, LDPE, MDPE, UHDPE ou HDPE, ou des combinaisons de ceux-ci.

15. Mélange maître (D) selon la revendication 13, dans lequel l'adjuvant de fabrication polymère selon la revendication 1 représente de 1 à 15 %, plus préférentiellement de 1 à 10 %, tout particulièrement de préférence de 1 à 8 % en poids de la composition de mélange maître.

16. Polymère polyoléfinique (E) contenant l'adjuvant de fabrication polymère selon l'une quelconque des revendications 1 à 4.

17. Polymère polyoléfinique (E) selon la revendication 16, dans lequel la quantité d'adjuvant de fabrication polymère représente de 50 à 3 000 ppm, plus préférentiellement de 50 à 2 000 ppm, tout particulièrement de préférence de 100 à 1 500 ppm en poids du polymère à extruder.

18. Film extrudé contenant l'auxiliaire de fabrication polymère selon l'une quelconque des revendications 1 à 4.

19. Film extrudé contenant le polymère polyoléfinique (E) selon la revendication 17.

20. Procédé d'extrusion comprenant les étapes consistant à ajouter l'adjuvant de fabrication polymère selon l'une quelconque des revendications 1 à 4 à un polymère polyoléfinique à extruder pour former un mélange, puis extruder le mélange pour former un film ou un article choisi dans le groupe constitué par un tube, un tuyau, une isolation de câble, une gaine de câble ou une feuille extrudés.

21. Procédé d'extrusion d'un film comprenant les étapes consistant à ajouter le mélange maître selon la revendication 13 à un polymère polyoléfinique pour former un mélange, puis extruder le mélange pour former un film ou un article choisi dans le groupe constitué par un tube, un tuyau, une isolation de câble, une gaine de câble ou une feuille extrudés.
